# EUROPÄISCHE PATENTSCHRIFT

(11) **EP 1 965 168 B1**
(45) Veröffentlichungstag und Bekanntmachung des Hinweises auf die Patenterteilung: **05.08.2009**
(21) Anmeldenummer: 08100524.1
(22) Anmeldetag: 16.01.2008
(51) Int. Cl.: G01B 3/06

(54) **Gliedermaßstab**
Folding rule
Mètre pliant

(30) Priorität: 02.03.2007 DE 102007010799
(43) Veröffentlichungstag der Anmeldung: 03.09.2008
(73) Patentinhaber: Adga Adolf Gampper GmbH, 74535 Mainhardt (DE)
(72) Erfinder: Gampper, Gerald, 74535, Mainhardt (DE)
(74) Vertreter: Wolf, Eckhard

(56) Entgegenhaltungen:
- EP-B- 0 576 429
- DE-A1- 1 903 281
- DE-A1- 3 619 189
- DE-A1- 4 302 699
- US-A- 1 907 459
- US-A- 2 663 940

## Beschreibung

Die Erfindung betrifft einen Gliedermaßstab mit mehreren an Gelenken gegeneinander verschwenkbaren und über je einen Rastmechanismus in ihren Parallellagen paarweise miteinander verrastenden langgestreckten flachen Maßstabsgliedern aus Holz, wobei die Gelenke jeweils einen durch miteinander fluchtende Gelenkbohrungen in benachbarten Maßstabsgliedern hindurchgreifenden und dabei die Maßstabsglieder unter Gegeneinanderdrücken ihrer einander zugewandten Breitseitenflächen paarweise miteinander verbindenden Nietbolzen aufweisen, wobei der Rastmechanismus eines jeden gelenkig verbundenen Gliederpaares zwei in Längsrichtung nach entgegengesetzten Seiten im Abstand von der Gelenkbohrung angeordnete Rastvertiefungen und am anderen Maßstabsglied mindestens ein in diese vorzugsweise unter elastischer Vorspannung in die Parallellage einrastende komplementäre Rasterhöhung aufweist, wobei die Rastvertiefungen unmittelbar in das Maßstabsholz eingeformt sind und wobei die Rasterhöhung durch mindestens einen im Abstand der Rastvertiefungen von der Gelenkbohrung innerhalb der Breitseitenfläche des anderen Maßstabsglieds im Maßstabsholz verankerten, mit einer Rastfläche über die Breitseitenfläche überstehenden Rastkörper gebildet ist.
Es ist ein Gliedermaßstab dieser Art bekannt (EP-B-576429), bei welchem die Rastkörper und die Rastvertiefungen die Gestalt von zueinander komplementären kugelförmigen Kalotten aufweisen. Die Rastkörper und Rastvertiefungen sind dort in einem solchen Längsabstand von der benachbarten Gelenkbohrungsachse angeordnet, dass sie bei um 90° gegeneinander verschwenkten Maßstabsgliedern vollständig außerhalb des gegenseitigen Überdeckungsbereichs der Maßstabsglieder angeordnet sind. Mit dem relativ großen Abstand des Rastkörpers von der Gelenkbohrung wird zwar eine gute Rastwirkung in den Parallellagen der Maßstabsglieder erzielt. Es muss dabei jedoch in Kauf genommen werden, dass in dem Zwischenbereich nur eine relativ kleine, ausschließlich durch die Presskraft der Nietverbindung hervorgehobene Reibung zwischen den Maßstabsgliedern entsteht, die bei häufigem Gebrauch durch Verschleißerscheinungen abnimmt. Dementsprechend ist der bei Gliedermaßstäben erwünschte Selbsthalteeffekt bei gegeneinander abgewinkelten Maßstabsgliedern nicht ohne weiteres gewährleistet. Hinzu kommt, dass beim Auflaufen der Rastkörper auf die benachbarten Maßstabsglieder im Zuge eines Schwenkvorgangs aufgrund der plötzlich einsetzenden Biegung der Gliedenden eine abrupte Widerstandsänderung auftritt, die die Handhabung des Gliedermaßstabs erschwert.

Um diese Nachteile zu vermeiden, wurde bereits vorgeschlagen (DE-C-4302699), dass die Rastvertiefung und die Rastkörper zumindest in einem Teil ihres Umrisses einen weniger als der halben Gliedbreite entsprechenden Längsabstand von der benachbarten Gelenkbohrung aufweisen und dass in größerem Abstand von der Gelenkbohrung ein zweites Paar Rastvertiefungen in das Maßstabsholz eingeformt ist, wobei innerhalb der Breitseitenfläche des anderen Maßstabsglieds mindestens ein weiterer, im Abstand der zweiten Rastvertiefungen von der Gelenkbohrung angeordneter Rastkörper im Maßstabsholz verankert ist. Mit diesen Maßnahmen wird erreicht, dass über den gesamten Schwenkbereich der Maßstabsglieder auch nach langem Gebrauch ein annähernd konstanter Schwenkwiderstand vorhanden ist und dass trotzdem eine gute Rastwirkung in den Parallellagen erzielt wird. Als nachteilig wird jedoch angesehen, dass die kugelkalottenförmigen Rastkörper aufgrund der elastischen Verformung der Maßstabsglieder punktuelle Druckkräfte auf das Gliedende ausüben, so dass sich in der Handhabung des Maststabs allmählich vollkreisförmige und teilkreisförmige Laufspuren in das benachbarte Maßstabsholz einprägen, so dass die Rastkräfte allmählich nachlassen. Hinzu kommt, dass die Verdoppelung in der Anzahl der Rastvertiefungen und Rastkörper einen erhöhten Fertiguns- und Montageaufwand erfordert.

In US1907459 wird ein Einrastmechanismus für Gliedermaßstäbe beschrieben, wobei die Rastkörper und Rastvertiefungen als langgestreckte, keilförmige, abgerundete Erhebungen und dazu komplementäre Vertiefungen ausgebildet sind und wobei deren der Gelenkbohrung zugewandte und von dieser abgewandte Begrenzungsränder einen Abstand von der Gelenkbohrung aufweisen, der im ersten Falle kleiner und im zweiten Fall grösser als die Gliedbreite ist. Die Rastveriefungen und die Rastkörper sind entweder an Beschlägen angeordnet, die im Bereich der Breitseitenflächen der Maßstabglieder fixiert sind oder sie sind an den Maßstabgliedern selbst angeformt.

Erfindungsgemäss wird die im Patentanspruch 1 angegebene Merkmalskombination vorgeschlagen. Vorteilhafte Ausgestaltungen und Weiterbildungen der Erfindung ergeben sich aus den abhängigen Ansprüchen.

Zur weiteren Verbesserung des weichen Aufgleitens der Rast wird gemäß einer vorteilhaften Ausgestaltung der Erfindung vorgeschlagen, dass die Rastvertiefungen quer zu ihrer Längserstreckung schräge Auflaufflanken aufweisen.

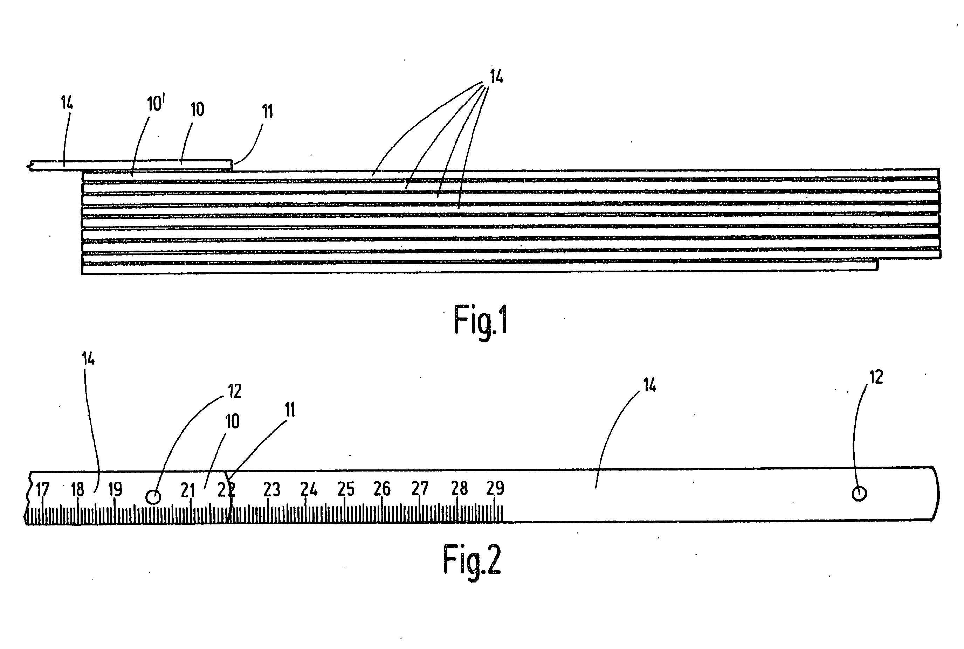

Im Folgenden wird die Erfindung anhand eines in der Zeichnung in schematischer Weise dargestellten Ausführungsbeispiels näher erläutert. Es zeigen
- Fig. 1: eine Seitenansicht eines Holzgliedermaßstabs mit ausgeschwenktem oberem Maßstabsglied;
- Fig. 2: eine Draufsicht auf den Gliedermaßstab nach Fig. 1;
- Fig.3: eine schaubildliche Darstellung zweier Maßstabsglieder eines Gliedermaßstabs in aufgeklapptem Zustand;

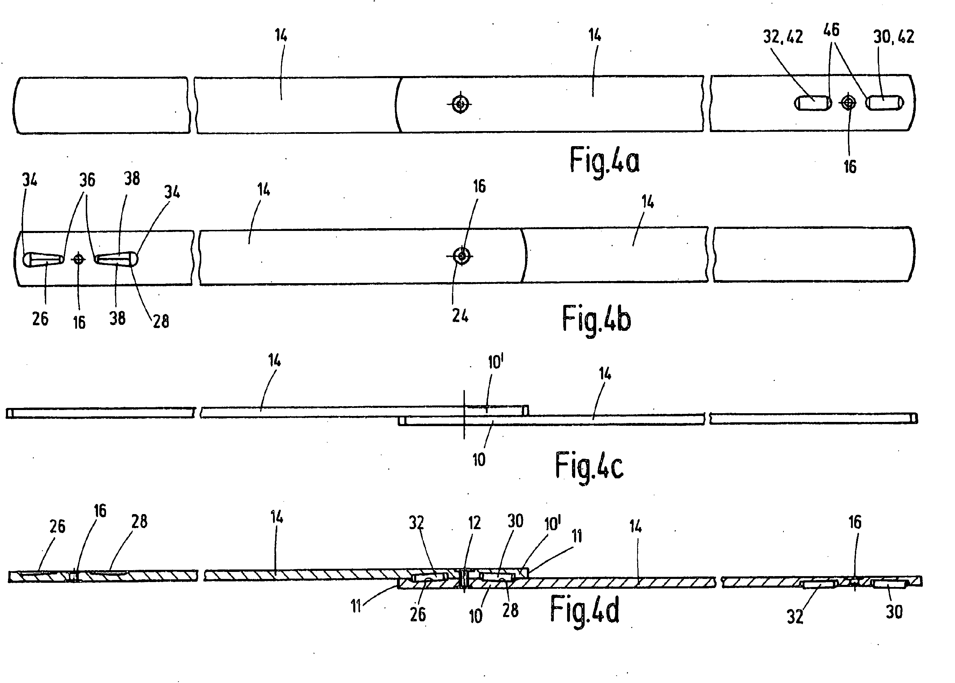

- Fig. 4a: bis d zwei Breitseitenansichten, eine Schmalseitenansicht sowie einen Längsschnitt der beiden Maßstabsglieder nach Fig. 3;
- Fig. 5: einen Schnitt entlang der Schnittlinie A-A der Fig. 4c in vergrößerter Darstellung;
- Fig. 6: einen vergrößerten Ausschnitt aus Fig. 4d.

Die in der Zeichnung dargestellten Gliedermaßstäbe bestehen aus einer größeren Anzahl, beispielsweise zehn paarweise in der Nähe ihrer Gliedenden 10,10' im Abstand von den stirnseitigen Gliedkanten 11 mittels Nietbolzen 12 paarweise gelenkig miteinander verbundenen Maßstabsgliedern 14. Die Nietbolzen greifen durch miteinander fluchtende Gelenkbohrungen 16 in den Maßstabsgliedern 14 hindurch und stützen sich mit ihren Köpfen 18,20 in Vertiefungen 24 der Maßstabsglieder 14 ab und drücken die Maßstabsglieder 14 paarweise an ihren einander zugewandten Breitseitenflächen gegeneinander. Ein im Bereich der miteinander verbundenen Gliedenden angeordneter Rastmechanismus sorgt dafür, dass die Maßstabsglieder 14 in ihren Parallellagen miteinander verrastbar sind und in ihren Schwenklagen eine definierte Reibung oder Bremskraft entsteht.

Der Rastmechanismus eines jeden gelenkig verbundenen Gliederpaars weist an einem Maßstabsglied 14 zwei in Längsrichtung im Abstand von der Gelenkbohrung 16 angeordnete Rastvertiefungen 26,28 und am anderen Maßstabsglied 14 zwei in die Rastvertiefungen in den Parallellagen der Maßstabsglieder einrastende komplementäre Rasterhebungen 30,32 auf. Die Rastvertiefungen 26,28 sind dabei als in Längsrichtung des betreffenden Maßstabsglieds verlaufende langgestreckte Ausnehmungen im Maßstabsholz ausgebildet, deren der Gelenkbohrung 16 zugewandter Begrenzungsrand 34 einen Abstand von der Gelenkbohrung 16 aufweist, der kleiner als die halbe Gliedbreite ist und deren von der Gelenkbohrung 16 abgewandter Begrenzungsrand 36 einen Abstand von der Gelenkbohrung aufweist, der größer als die halbe Gliedbreite ist. Eine der Rastvertiefungen 26 befindet sich in der Nähe des stirnseitigen Endes des betreffenden Maßstabsglieds, während die andere Rastvertiefung 28 sich auf der Skalenseite des Maßstabsglieds befindet. Beide Rastvertiefungen weisen eine in Richtung Gelenkbohrung abnehmende Tiefe und Breite auf, und bilden an ihren Flanken 38 eine quer zur Längserstreckung verlaufende Auflaufschräge für die benachbarte Rasterhebung 30,32.

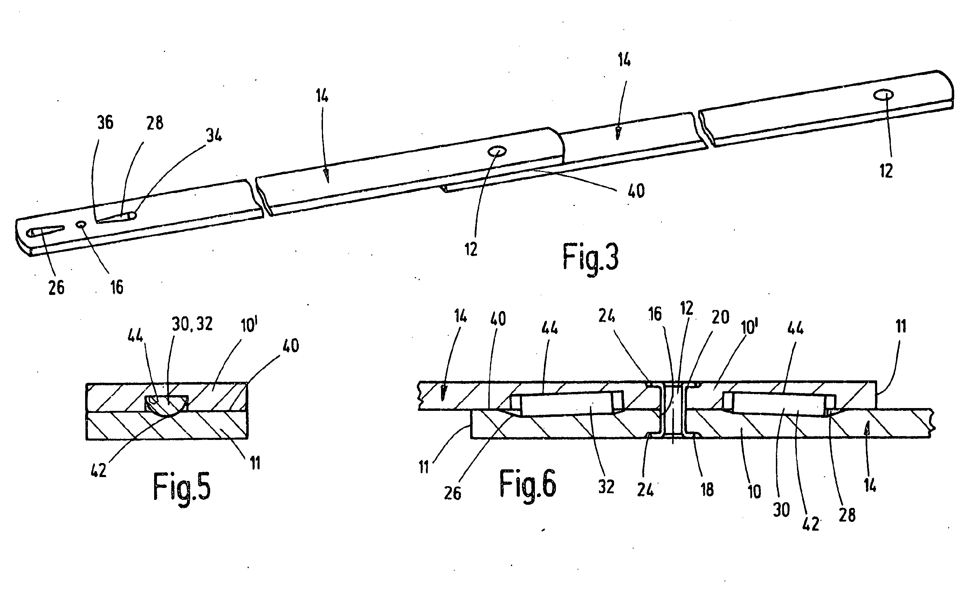

Die Rasterhebungen 30,32 sind durch zwei in gleichem Abstand wie die Rastvertiefungen 26,28 von der Gelenkbohrung 16 innerhalb der Breitseitenfläche des anderen Maßstabsglieds im Maßstabsholz verankerte Rastkörper ausgebildet, die mit einer glatten Rastfläche über die Breitseitenfläche 40 des betreffenden Maßstabsglieds 14 überstehen. Bei dem in der Zeichnung dargestellten Ausführungsbeispiel weisen die Rastkörper 30,32 die Gestalt einer langgestreckten Zylinderkalotte mit einer im Schnitt im Wesentlichen halbkreisförmigen Rastfläche 42 und einer ebenen Bodenfläche 44 auf. Die Rastkörper 30,32 greifen in eine langgestreckte randoffene Aussparung 46 in der Breitseitenfläche 40 des betreffenden Maßstabsglieds 14 ein und sind dort form- und kraftschlüssig verankert. Die Rastkörper sind in ihrer Längserstreckung in Längsrichtung der Maßstabsglieder 14 ausgerichtet. Wie insbesondere aus Fig. 6 zu ersehen ist, stehen die Rastkörper 30,32 mit einer in Richtung zur Gelenkbohrung 16 abnehmenden Höhe über die Breitseitenfläche 40 des betreffenden Maßstabsglieds über. Dies wird bei dem gezeigten Ausführungsbeispiel dadurch erreicht, dass die Aussparungen 46 im Maßstabsglied eine in Längsrichtung zur Gelenkbohrung 16 hin zunehmende Tiefe aufweisen, so dass die Rastkörper 30,32 mit seiner Bodenfläche 44 auf dem schrägen Boden der zugehörigen Aussparungen 46 aufliegen und mit ihrer Rastfläche 42 mit abnehmender Höhe in Richtung Gelenkbohrung 16 aus der Aussparung herausragen. Die Rastkörper 30,32 werden von einem extrudierten Strangmaterial mit halbkreisförmigem Querschnitt so abgelängt, dass sie exakt in die zugehörigen Aussparungen 46 passen. Beim Ablängen entstehen vor allem im Endbereich Grate, die sich beim Einpressen der Rastkörper 30,32 in die Aussparungen 46 im Maßstabsholz verhaken. Im Übrigen sind die Rastkörper 30,32 im Presssitz in die randoffenen Aussparungen des Maßstabsglieds eingesetzt. Im montierten Zustand werden die Rastkörper 30,32 vom benachbarten Maßstabsglied in ihrer Aussparung festgehalten, so dass sie sich nicht aus der Aussparung lösen können. Im Normalfall ist es daher entbehrlich, die Rastkörper zusätzlich in ihren Aussparungen festzukleben.

Um die Maßstabsglieder 14 im zusammengeklappten Zustand des Gliedermaßstabs unter einer gewissen Vorspannung zu halten, ist es von Vorteil, wenn die der freien Stirnseite des jeweiligen Maßstabsglieds 14 zugewandte Rastkörper 30 zumindest im zusammengeklappten Zustand tiefer in die zugehörige Rastvertiefung eingesenkt ist, als die skalenseitig angeordneten Rastkörper 32. Dies kann beispielsweise dadurch erreicht werden, dass die der freien Stirnseite zugewandte Rastvertiefung 26 weniger tief als die skalenseitige Rastvertiefung 28 ist. Zusätzlich oder alternativ dazu kann außerdem die der freien Stirnseite des betreffenden Maßstabsglieds zugewandte Rastkörperaussparung weniger tief als die skalenseitige Rastkörperaussparung ausgebildet werden.

## Patentansprüche

1. Gliedermaßstab mit mehreren an Gelenken gegeneinander verschwenkbaren und über je einen Rastmechanismus in ihren Parallellagen paarweise miteinander verrastenden langgestreckten flachen Maßstabsgliedern (14) aus Holz, wobei die Gelenke jeweils einen durch miteinander fluchtende Gelenkbohrungen (16) in benachbarten Maßstabsgliedem (14) hindurchgreifende, und dabei die Maßstabsglieder (14) unter Gegeneinanderdrücken ihrer einander zugewandten Breitseitenfläche paarweise miteinander verbindende Nietbolzen (12) aufweisen, wobei der Rastmechanismus eines jeden gelenkig verbundenen Gliederpaares an einem Maßstabsglied zwei in Längsrichtung auf entgegengesetzten Seiten im Abstand von der Gelenkbohrung (16) angeordnete Rastvertiefungen (26,28) und am anderen Maßstabsglied (14) mindestens ein in diese vorzugsweise unter elastischer Vorspannung in den Parallellagen einrastende komplementäre Rasterhebung (30,32) aufweist, wobei die Rastvertiefungen (26,28) unmittelbar in das Maßstabsholz eingeformt sind und wobei die Rasterhebung durch mindestens einen im Abstand der Rastvertiefungen (26,28) von der Gelenkbohrung (16) innerhalb der Breitseitenfläche (40) des anderen Maßstabsgliedes (14) im Maßstabsholz angeordneten, mit einer Rastfläche (42) über die Breitseitenfläche (40) überstehenden Rastkörper (30, 32) gebildet ist, wobei die Rastvertiefungen (26,28) als in Längsrichtung des betreffenden Maßstabsglieds (14) verlaufende langgestreckte Ausnehmungen im Maßstabsholz ausgebildet sind, deren der Gelenkbohrung (16) zugewandte und von dieser abgewandte Begrenzungsränder (34,36) einen Abstand von der Gelenkbohrung (16) aufweisen, der im ersten Falle kleiner und im zweiten Falle größer als die halbe Gliedbreite ist, dass die Rastkörper (30,32) die Gestalt einer langgestreckten Zylinderkalotte mit einem ebenen Boden (44) aufweisen, und wobei die zur Aufnahme der Rastkörper bestimmten Aussparungen (46) im Maßstabsglied (14) eine zur Gelenkbohrung (16) hin zunehmende Tiefe aufweisen.

2. Gliedermaßstab nach Anspruch 1, wobei die Rastkörper (30,32) mit ihrem Boden in die langgestreckte Aussparung (46) in der Breitseitenfläche (40) des betreffenden Maßstabsglieds (14) form- und/oder kraftschlüssig eingreifen.

3. Gliedermaßstab nach Anspruch 1 oder 2, wobei die die Rastvertiefungen (26,28) bildenden Ausnehmungen eine in Richtung Gelenkbohrung (16) abnehmende Tiefe und Breite aufweisen.

4. Gliedermaßstab nach einem der Ansprüche 1 bis 3, wobei die Rastkörper (30,32) mit einer in Richtung Gelenkbohrung (16) abnehmenden Höhe über die Breitseitenfläche 40 des betreffenden Maßstabsglieds (14) überstehen.

5. Gliedermaßstab nach einem der Ansprüche 2 bis 4, wobei die Rastkörper (30,32) im Presssitz in die zugehörigen Aussparungen (46) im Maßstabsglied (14) eingesetzt sind.

6. Gliedermaßstab nach einem der Ansprüche 2 bis 5, wobei die Rastkörper (30,32) in die zugehörigen Aussparungen (46) eingeklebt sind.

7. Gliedermaßstab nach einem der Ansprüche 1 bis 6, wobei die Rastkörper (30,32) als Kunststoffformteile ausgebildet sind.

8. Gliedermaßstab nach Anspruch 7, wobei die Rastkörper (30,32) von einem Kunststoffstrang mit teilzylindrischem Querschnitt abgelängt sind.

9. Gliedermaßstab nach einem der Ansprüche 1 bis 8, wobei sowohl auf der der freien Stirnseite des Maßstabsglieds (14) zugewandten als auch auf der hiervon abgewandten Seite der Gelenkbohrung (16) ein langgestreckter Rastkörper (30,32) angeordnet ist.

10. Gliedermaßstab nach Anspruch 9, wobei der der freien Stirnseite des Maßstabsglieds (14) zugewandte Rastkörper (30) zumindest im zusammengeklappten Zustand weniger tief in die zugehörige Rastvertiefung versenkt ist als der gegenüberliegende Rastkörper (32).

11. Gliedermaßstab nach einem der Ansprüche 1 bis 10, wobei die auf der Stirnseite des Maßstabsglieds zugewandte Rastvertiefung (26) weniger tief als die andere Rastvertiefung (28) ausgebildet ist.

12. Gliedermaßstab nach einem der Ansprüche 1 bis 11, wobei die der Stirnseite des Maßstabsglieds zugewandte Rastkörperaussparung (46) weniger tief als die andere Rastkörperaussparung (46) ausgebildet ist.

13. Gliedermaßstab nach einem der Ansprüche 1 bis 12, wobei die Rastvertiefung (26,28) quer zu ihrer Längserstreckung schräg verlaufende Auflaufflächen für die Rasterhebungen bzw. Rastkörper (30,32) aufweisen.

## Claims

1. Folding rule comprising a plurality of elongate flat rule members (14) made of wood which can be pivoted relative to one another at hinges and which latch together in pairs in their parallel positions via a respective latching mechanism, wherein the hinges each comprise a rivet bolt (12) which engages through mutually aligned hinge holes (16) in adjacent rule members (14) and thereby interconnects the rule members (14) in pairs while pressing their mutually facing broad side faces against one another, wherein the latching mechanism of each hingeably connected pair of members comprises, on one rule member (14), two latching depressions (26, 28) which are arranged in the longitudinal direction on opposite sides of and at a distance from the hinge hole (16), and, on the other rule member (14), at least one complementary latching elevation (30, 32) which latches into said depressions, preferably with elastic prestressing, in the parallel positions, wherein the latching depressions (26, 28) are directly formed in the wood of the rule, and wherein the latching elevation is formed by at least one latching element (30, 32) which is arranged in the wood of the rule within the broad side face (40) of the other rule member (14), at the spacing of the latching depressions (26, 28) from the hinge hole (16), and which projects by way of a latching face (42) beyond the broad side face (40), wherein the latching depressions (26, 28) are formed in the wood of the rule as elongate cutouts which extend in the longitudinal direction of the respective rule member (14) and of which the boundary edges (34, 36) directed towards and directed away from the hinge hole (16) are at a distance from the hinge hole (16) that, in the first case, is smaller than half the width of a member and, in the second case, is greater than half the width of a member, wherein the latching elements (30, 32) have the form of an elongate cylindrical dome with a flat base (44), and wherein the recesses (42) in the rule member (14) which are intended for accommodating the latching elements have a depth which increases towards the hinge hole (16).

2. Folding rule according to Claim 1, wherein the latching elements (30, 32) engage in a form-fitting and/or force-fitting manner by way of their base into the elongate recess (46) in the broad side face (40) of the respective rule member (14).

3. Folding rule according to Claim 1 or 2, wherein the cutouts forming the latching depressions (26, 28) have a depth and width which decrease in the direction of the hinge hole (16).

4. Folding rule according to one of Claims 1 to 3, wherein the latching elements (30, 32) project beyond the broad side face (40) of the respective rule member (14) with a height which decreases in the direction of the hinge hole (16).

5. Folding rule according to one of Claims 2 to 4, wherein the latching elements (30, 32) are inserted with a press fit into the associated recesses (46) in the rule member (14).

6. Folding rule according to one of Claims 2 to 5, wherein the latching elements (30, 32) are glued into the associated recesses (46).

7. Folding rule according to one of Claims 1 to 6, wherein the latching elements (30, 32) are designed as moulded plastic parts.

8. Folding rule according to Claim 7, wherein the latching elements (30, 32) are cut to length from a plastic extrudate having a partially cylindrical cross section.

9. Folding rule according to one of Claims 1 to 8, wherein an elongate latching element (30, 32) is arranged both on the side of the hinge hole (16) that is directed towards the free end side of the rule member (14) and on the side of the hinge hole (16) that is directed away from this free end side.

10. Folding rule according to Claim 9, wherein, at least in the folded-up state, the latching element (30) directed towards the free end side of the rule member (14) is sunk less deeply into the associated latching depression than the opposite latching element (32).

11. Folding rule according to one of Claims 1 to 10, wherein the latching depression (26) directed towards the end side of the rule member is designed to be less deep than the other latching depression (28).

12. Folding rule according to one of Claims 1 to 11, wherein the latching element recess (46) directed towards the end side of the rule member is designed to be less deep than the other latching element recess (46).

13. Folding rule according to one of Claims 1 to 12, wherein the latching depressions (26, 28) have run-on surfaces which extend obliquely transversely to their longitudinal extent and which are intended for the latching elevations or latching elements (30, 32).

## Revendications

1. Mètre pliant avec plusieurs éléments de mètre (14) plats allongés en bois, pivotant l'un par rapport à l'autre au niveau d'articulations et se calant l'un avec l'autre par paires dans leurs positions parallèles au moyen d'un mécanisme d'encliquetage, dans lequel les articulations comprennent chaque fois un rivet (12) passant à travers des alésages d'articulation (16) alignés l'un avec l'autre dans des éléments de mètre voisins (14) et assemblant ainsi l'un à l'autre par paires les éléments de mètre (14) en pressant l'une contre l'autre leurs faces larges tournées l'une vers l'autre, dans lequel le mécanisme d'encliquetage de chaque paire d'éléments articulés l'un à l'autre présente, sur l'un des éléments de mètre (14), deux creux d'encliquetage (26, 28) disposés sur des côtés opposés en direction longitudinale à distance de l'alésage d'articulation (16) et, sur l'autre élément de mètre (14), au moins une bosse d'encliquetage (30, 32) complémentaire se calant dans ceux-ci, de préférence avec une précontrainte élastique, dans les positions parallèles, dans lequel les creux d'encliquetage (26, 28) sont façonnés directement dans le bois du mètre et dans lequel la bosse d'encliquetage est formée par au moins un corps d'encliquetage (30, 32) saillant sur la face large (40) avec une surface d'encliquetage (42) et disposée dans le bois du mètre à distance des creux d'encliquetage (26, 28) de l'alésage d'articulation (16) à l'intérieur de la face large (40) de l'autre élément de mètre (14), dans lequel les creux d'encliquetage (26, 28) sont réalisés en forme de cavités allongées dans le bois du mètre, s'étendant dans la direction longitudinale de l'élément de mètre concerné (14), dont les bords de délimitation (34, 36) tournés vers et éloignés de l'alésage d'articulation (16) présentent une distance de l'alésage d'articulation (16) qui est dans le premier cas plus petite et dans le second cas plus grande que la moitié de la largeur de l'élément, dans lequel les corps d'encliquetage (30, 32) présentent la forme d'une calotte cylindrique oblongue avec un fond plan (44), et dans lequel les découpes (46) dans l'élément de mètre (14), destinées à recevoir les corps d'encliquetage, présentent une profondeur croissante en direction de l'alésage d'articulation (16).

2. Mètre pliant selon la revendication 1, dans lequel les corps d'encliquetage (30, 32) s'engagent avec leur fond dans la découpe oblongue (46) dans la face large (40) de l'élément de mètre concerné (14), en complémentarité de forme et/ou de force.

3. Mètre pliant selon la revendication 1 ou 2, dans lequel les cavités formant les creux d'encliquetage (26, 28) présentent une profondeur et une largeur décroissant en direction de l'alésage d'articulation (16).

4. Mètre pliant selon l'une quelconque des revendications 1 à 3, dans lequel les corps d'encliquetage (30, 32) sont saillants au-dessus de la face large (40) de l'élément de mètre concerné (14) avec une hauteur décroissant en direction de l'alésage d'articulation (16).

5. Mètre pliant selon l'une quelconque des revendications 2 à 4, dans lequel les corps d'encliquetage (30, 32) sont introduits en ajustement serré dans les découpes correspondantes (46) dans l'élément de mètre (14).

6. Mètre pliant selon l'une quelconque des revendications 2 à 5, dans lequel les corps d'encliquetage (30, 32) sont collés dans les découpes correspondantes (46).

7. Mètre pliant selon l'une quelconque des revendications 1 à 6, dans lequel les corps d'encliquetage (30, 32) sont des pièces moulées en plastique.

8. Mètre pliant selon la revendication 7, dans lequel les corps d'encliquetage (30, 32) sont coupés à longueur à partir d'une tige de plastique de section transversale partiellement cylindrique.

9. Mètre pliant selon l'une quelconque des revendications 1 à 8, dans lequel un corps d'encliquetage oblong (30, 32) est disposé aussi bien sur le côté de l'alésage d'articulation (16) tourné vers le côté frontal libre de l'élément de mètre (14) que sur le côté opposé à celui-ci.

10. Mètre pliant selon la revendication 9, dans lequel le corps d'encliquetage (30) tourné vers le côté frontal libre de l'élément de mètre (14) est, au moins en position repliée, enfoncé moins profondément dans le creux d'encliquetage correspondant que le corps d'encliquetage opposé (32).

11. Mètre pliant selon l'une quelconque des revendications 1 à 10, dans lequel le creux d'encliquetage (26) tourné vers le côté frontal de l'élément de mètre est moins profond que l'autre creux d'encliquetage (28).

12. Mètre pliant selon l'une quelconque des revendications 1 à 11, dans lequel la découpe de corps d'encliquetage (46) tournée vers le côté frontal de l'élément de mètre est moins profonde que l'autre découpe de corps d'encliquetage (46).

13. Mètre pliant selon l'une quelconque des revendications 1 à 12, dans lequel le creux d'encliquetage (26, 28) présente des faces d'approche s'entendant en oblique, transversalement à sa direction longitudinale, pour les bosses d'encliquetage ou les corps d'encliquetage (30, 32).
